(19) Europäisches Patentamt / European Patent Office / Office européen des brevets

(11) **EP 4 773 293 A1**

(12) **EUROPEAN PATENT APPLICATION**
published in accordance with Art. 153(4) EPC

(43) Date of publication:
08.07.2026 Bulletin 2026/28

(21) Application number: 24859769.2

(22) Date of filing: 27.08.2024

(51) International Patent Classification (IPC):
H01M 10/0566 $^{(2010.01)}$   H01G 11/56 $^{(2013.01)}$
H01G 11/58 $^{(2013.01)}$   H01G 11/62 $^{(2013.01)}$
H01M 4/13 $^{(2010.01)}$   H01M 4/62 $^{(2006.01)}$
H01M 10/052 $^{(2010.01)}$   H01M 10/0562 $^{(2010.01)}$
H01M 10/0568 $^{(2010.01)}$   H01M 12/08 $^{(2006.01)}$

(52) Cooperative Patent Classification (CPC):
H01G 11/56; H01G 11/58; H01G 11/62; H01M 4/13;
H01M 4/62; H01M 10/052; H01M 10/0562;
H01M 10/0566; H01M 10/0568; H01M 12/08;
Y02E 60/10

(86) International application number:
PCT/JP2024/030497

(87) International publication number:
WO 2025/047737 (06.03.2025 Gazette 2025/10)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.08.2023 JP 2023140940

(71) Applicant: Niterra Co., Ltd.
Nagoya-shi, Aichi 461-0005 (JP)

(72) Inventors:
• KAJIURA, Ryunosuke
Nagoya-shi, Aichi 461-0005 (JP)

• KATAOKA, Kazuki
Nagoya-shi, Aichi 461-0005 (JP)
• WATANABE, Yuu
Nagoya-shi, Aichi 461-0005 (JP)
• SUZUKI, Akihiro
Nagoya-shi, Aichi 461-0005 (JP)
• HIKOSAKA, Hideaki
Nagoya-shi, Aichi 461-0005 (JP)
• KITAMURA, Masahiro
Nagoya-shi, Aichi 461-0005 (JP)

(74) Representative: Zimmermann & Partner
Patentanwälte mbB
P.O. Box 330 920
80069 München (DE)

(54) **ELECTROLYTE SOLUTION, ELECTROLYTE COMPOSITION, AND ELECTROCHEMICAL ELEMENT**

(57) Objects of the invention are to provide an electrolytic solution, an electrolyte composition, and electrochemical element, which can attain an enhanced transport number of ions involved in energy conversion. The electrolytic solution contains a non-aqueous solvent and exhibits a difference between a loss modulus at 25°C and a storage modulus at 25°C of 2,440 Pa or more and 6,720 Pa or less. The electrolytic solution preferably has a loss modulus of 5,400 Pa or higher, and a storage modulus of 0.34 Pa or lower. The electrolyte composition contains the electrolytic solution and particles of an oxide solid electrolyte. The electrochemical element has an electrode containing the electrolytic solution.

**(Cont. next page)**

EP 4 773 293 A1

## FIG. 1

**Description**

TECHNICAL FIELD

The present invention relates to an electrolytic solution containing a non-aqueous solvent, to an electrolyte composition, and to an electrochemical element.

BACKGROUND ART

Electrochemical elements such as a lithium ion secondary battery convert chemical energy to electric energy. Patent Literature 1 discloses a related technique being concerned with an electrochemical element which includes an electrolytic solution containing a non-aqueous solvent. The electrolytic solution serves as a medium which allows transfer of ions therein.

CITATION LIST

PATENT LITERATURE

Patent Literature 1: JP2011-44252A

SUMMARY OF INVENTION

TECHNICAL PROBLEM

In such an electrochemical element, both ions involved in energy conversion and ions not involved in energy conversion move in the electrolytic solution of the element. The aforementioned related technique achieves a problematically low transport number of ions involved in energy conversion.
The present invention has been conceived to solve the above problem, and objects of the invention are to provide an electrolytic solution, an electrolyte composition, and electrochemical element, which can attain an enhanced transport number of ions involved in energy conversion.

SOLUTION TO PROBLEM

In a first aspect to attain the above objects, there is provided an electrolytic solution containing a non-aqueous solvent which solution exhibits a difference between a loss modulus at 25°C and a storage modulus at 25°C of 2,440 Pa or more and 6,720 Pa or less.
In a second aspect, the loss modulus in the first aspect is 5,400 Pa or higher.
In a third aspect, the storage modulus in the first or second aspect is 0.34 Pa or lower.
In a fourth aspect, a supporting electrolyte is added to the non-aqueous solvent in any of the first to third aspects, and a supporting electrolyte concentration is 1 mol/dm$^3$ or higher and 2 mol/dm$^3$ or lower.
In a fifth aspect, the supporting electrolyte added to the non-aqueous solvent in any of the first to fourth aspects is a lithium salt.
In a sixth aspect, there is provided an electrolyte composition which contains an electrolytic solution as recited in any of the first to fifth aspects, and particles of an oxide solid electrolyte.
In a seventh aspect, the oxide solid electrolyte of the sixth aspect has a garnet-type crystal structure including Li, La, and Zr.
In an eighth aspect, there is provided an electrochemical element having an electrode. The electrode contains an electrolytic solution as recited in any one of the first to fifth aspects.
In a ninth aspect, the electrode of the eighth aspect is a positive electrode.

ADVANTAGEOUS EFFECTS OF INVENTION

According to the electrolytic solution of the present invention, and the electrolyte composition and the electrochemical element each containing the electrolytic solution, the electrolytic solution exhibits a difference between the loss modulus at 25°C and the storage modulus at 25°C of 2,440 Pa or more and 6,720 Pa or less. Thus, mobility of ions involved in energy conversion successfully increases, to thereby enhance the transport number of the ions.

BRIEF DESCRIPTION OF DRAWINGS

FIG. 1 is a cross-sectional view of an electrochemical element of a first embodiment.
FIG. 2 is a schematic view of a garnet-type crystal structure.
FIG. 3 is a cross-sectional view of an electrochemical element of a second embodiment.

DESCRIPTION OF EMBODIMENTS

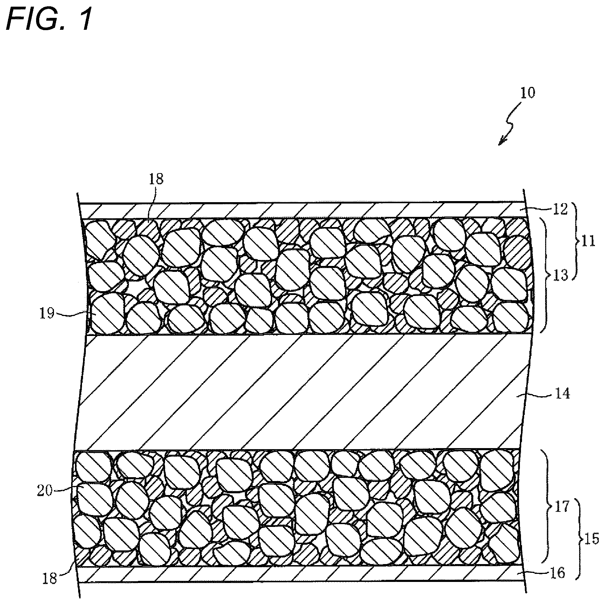

Hereinafter, preferred embodiments of the present invention will be described with reference to attached drawings. FIG. 1 is a schematic cross-section of an electrochemical element 10 of a first embodiment. The electrochemical element 10 corresponds to an element which directly converts chemical energy to electric energy. In the electrochemical element 10, examples of the ion species involved in energy conversion (hereinafter referred to as an "electric charge carrier") include cations such as $Li^+$, $Na^+$, $K^+$, $Mg^{2+}$, $Cu^+$, and $Ag^+$.

Next, a power storage device, which is an example of the electrochemical element 10, will be described. Examples of the power storage device include ion batteries such as a lithium ion battery, and electrochemical capacitors such as capacitors employing electrode redox reaction, redox reaction of ions in an electrolytic solution, or an electric double-layer. The electrochemical element 10 includes, from top to bottom, a positive electrode layer 11, a separator 14, and a negative electrode layer 15.

The separator 14 is formed of a porous body which is resistive to an electrolytic solution contained in the positive electrode 11, the negative electrode 15, or active materials 19, 20, and which allows passage of an electric charge carrier but has no electron conductivity. Examples of the material of the separator 14 include a nonwoven fabric and a porous membrane formed of cellulose, polypropylene, polyethylene, polyimide, alumina, etc.

The positive electrode 11 includes an active material layer 13 and a current-collector 12 stacked thereon. The current-collector 12 is a member having an electrical conductivity. Examples of the material of the current-collector 12 include metals selected from among Ni, Ti, Fe, and Al; alloys each containing two or more of such metal elements; stainless steel; and carbon material.

The active material layer 13 contains an active material 19. The active material 19 is appropriately chosen in accordance with the type of the electric charge carrier or the storage device. When the power storage device is an electrochemical capacitor, a material that can reversibly support anions is employed as the active material 19. Examples of such a material include carbonaceous materials such as porous carbon, natural carbon, artificial carbon, easy-to-graphitize carbon (i.e., hard carbon), hard-to-graphitize carbon (i.e., soft carbon), and carbon fiber.

In the case in which the power storage device is an ion battery, examples of the active material 19 include a metal oxide in which the metal includes a transition metal, a sulfur-containing active material, and an organic active material. In the case where the electric charge carrier is $Li^+$, examples of the metal oxide in which the metal includes a transition metal include a metal oxide in which the metal includes Li and at least one species selected from among Mn, Co, Ni, Fe, Cr, and V. Specific examples of the metal oxide in which the metal includes a transition metal include $LiCoO_2$, $LiNi_{0.8}Co_{0.15}Al_{0.05}O_2$, $LiMn_2O_4$, $LiNiVO_4$, $LiNi_{0.5}Mn_{1.5}O_2$, $LiNi_{1/3}Mn_{1/3}Co_{1/3}O_2$, and $LiFePO_4$.

Examples of the sulfur-containing active material include S, $TiS_2$, NiS, $FeS_2$, $Li_2S$, $MoS_3$, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radialene compounds; tetracyanoquinodimethane; and phenazine oxide.

For lowering the electrical resistance of the active material layer 13, the active material layer 13 may contain a conducting aid. Examples of the conducting aid include carbon black, acetylene black, Ketjen black, carbon fiber, Ni, Pt, and Ag.

In the present embodiment, the active material layer 13 contains an electrolyte composition. The electrolyte composition contains oxide solid electrolyte particles 18 and an electrolytic solution. Examples of the material of the particles 18 include an oxide having a NASICON-type structure, an oxide having a perovskite structure, and an oxide having a garnet-type structure. Examples of the oxide having a NASICON-type structure include an oxide at least including Li, M (M represents at least one element selected from Ti, Zr, and Ge) and P (e.g., $Li(Al,Ti)_2(PO_4)_3$ and $Li(Al,Ge)_2(PO_4)_3$). Examples of the oxide having a perovskite structure, include an oxide at least including Li, Ti, and La (e.g., $La_{2/3-x}Li_{3x}TiO_3$).

The particles 18 are preferably formed of a complex oxide having a garnet-type crystal structure including Li, La, and Zr, since the complex oxide achieves an ion conductivity on the order of $10^{-3}$ S/cm and has reduction resistance to metallic lithium. The garnet-type crystal structure is represented by a general formula $C_3A_2B_3O_{12}$.

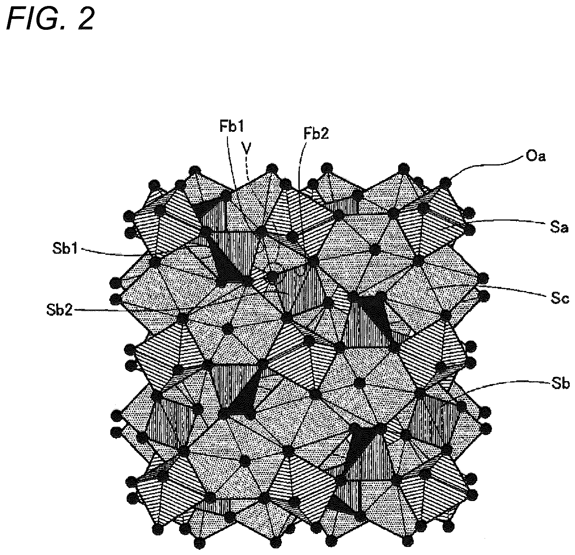

FIG. 2 is a schematic view of a garnet-type crystal structure. In the garnet-type crystal structure, a C site (Sc) coordinates with an oxygen atom (Oa) in a dodecahedral manner; an A site (Sa) with an oxygen atom (Oa) in an octahedral manner; and a B site (Sb) with an oxygen atom (Oa) in a tetrahedral manner. The oxide solid electrolyte generally has a garnet-type crystal structure, but Li may be present in a site (i.e., vacancy V), which is a site realizing octahedral coordination with an oxygen atom (Oa). The vacancy V is present at a site disposed, for example, between a B site (Sb1) and a B site (Sb2). The Li present in vacancy V coordinates, in an octahedral manner, with oxygen atoms (Oa) forming an octahedral structure which includes tetrahedral faces Fb1 and Fb2, in which Fb1 forms the B site (Sb1), and Fb2 forms the B site (Sb2). In one possible case, in $Li_7La_3Zr_2O_{12}$ having a garnet-type crystal structure, La is present in the C sites (Sc); Zr in the A sites (Sa), and Li in the B sites (Sb) and the vacancy (V).

The garnet-type crystal structure may be determined through X-ray diffraction. The garnet-type crystal structure exhibits an XRD pattern similar to that of an X-ray diffraction file No. 422259 ($Li_7La_3Zr_2O_{12}$) of CSD (Cambridge Structural Database). As compared with No. 422259, the solid electrolyte may have differences in the type of elements forming oxide, the Li concentration, and the like. Therefore, diffraction angle and intensity ratio may vary. A typical crystal structure in relation to the above is a cubic system (space group: Ia-3d ("-" is an over-line representing rotary inversion), JCPDS:84-1753).

A typical example of the material of the solid electrolyte having a garnet-type crystal structure is $Li_7La_3Zr_2O_{12}$. In the solid electrolyte, a part of the elements forming $Li_7La_3Zr_2O_{12}$ may be substituted by another element, or a small amount of additional element may be added thereto without substituting the original elements. Examples of the additional element include at least one element selected from the group consisting of Mg, Al, Si, Ca, Ti, V, Ga, Sr, Y, Nb, Sn, Sb, Ba, Hf, Ta, W, Bi, Rb, and lanthanoids (except for La).

Examples of the solid electrolyte include $Li_6La_3Zr_{1.5}W_{0.5}O_{12}$, $Li_{6.15}La_3Zr_{1.75}Ta_{0.25}Al_{0.2}O_{12}$, $Li_{6.15}La_3Zr_{1.75}Ta_{0.25}Ga_{0.2}O_{12}$, $Li_{6.25}La_3Zr_2Ga_{0.25}O_{12}$, $Li_{6.4}La_3Zr_{1.4}Ta_{0.6}O_{12}$, $Li_{6.5}La_3Zr_{1.75}Te_{0.25}O_{12}$, $Li_{6.75}La_3Zr_{1.75}Nb_{0.25}O_{12}$, $Li_{6.9}La_3Zr_{1.675}Ta_{0.289}Bi_{0.036}O_{12}$, $Li_{6.46}Ga_{0.23}La_3Zr_{1.85}Y_{0.15}O_{12}$, $Li_{6.8}La_{2.95}Ca_{0.05}Zr_{1.75}Nb_{0.25}O_{12}$, $Li_{7.05}La_{3.00}Zr_{1.95}Gd_{0.05}O_{12}$, and $Li_{6.20}Ba_{0.30}La_{2.95}Rb_{0.05}Zr_2O_{12}$.

Particularly, the solid electrolyte preferably contains at least one of Mg and element A (A represents at least one element selected from the group consisting of Ca, Sr, and Ba), and satisfies all the following conditions (1) to (3) regarding mole proportions of the elements. Alternatively, the solid electrolyte preferably contains both Mg and element A, and satisfies all the following conditions (4) to (6) regarding mole proportions of the elements. From the viewpoint of elevating the ion conductivity of the solid electrolyte, element A is preferably Sr.

$$(1)\ 1.33 \leq Li/(La+A) \leq 3$$

$$(2)\ 0 \leq Mg/(La+A) \leq 0.5$$

$$(3)\ 0 \leq A/(La+A) \leq 0.67$$

$$(4)\ 2.0 \leq Li/(La+A) \leq 2.5$$

$$(5)\ 0.01 \leq Mg/(La+A) \leq 0.14$$

$$(6)\ 0.04 \leq A/(La+A) \leq 0.17$$

The electrolytic solution contained in the active material layer 13 serves as a medium in which electric charge carriers move, and is a solution in which a supporting electrolyte is dissolved in a non-aqueous solvent. The non-aqueous solvent is roughly divided into a molecular solvent mainly formed of molecules and an ionic liquid composed of a cation and an anion. One reason for employing a non-aqueous solvent as the electrolytic solution is to widen the potential window, as compared with an electrolytic solution containing water as a solvent. Thus, an ionic liquid is preferred for achieving a wider potential window, as compared with an electrolytic solution containing water as a solvent.

When a molecular solvent is employed as the non-aqueous solvent, an aprotic solvent is preferred, from the viewpoint of widening the potential window of the electrolytic solution. Examples of the aprotic solvent include a cyclic ester, a chain ester, an aliphatic carboxylate ester, a phosphate ester, a nitrile, an amide, a sulfur compound, a ketone, an ether, a nitro compound, and a fluorous solvent. A mixture of these solvents may also be used.

Examples of the cyclic ester include cyclic carbonate esters such as propylene carbonate, ethylene carbonate, butylene carbonate, vinylene carbonate, vinylethylene carbonate, and fluoroethylene carbonate, and lactones such as β-propiolactone, γ-butyrolactone, δ-valerolactone, α-pyrone, and coumarin. Examples of the chain ester include chain carbonate esters such as dimethyl carbonate, diethyl carbonate, and ethyl methyl carbonate. Examples of the aliphatic carboxylate ester include methyl formate, methyl acetate, and ethyl propionate. Examples of the phosphate ester include trimethyl phosphate. Examples of the nitrile include acetonitrile, propionitrile, butyronitrile, and benzonitrile.

Examples of the amide include formamide, N-methylformamide, dimethylformamide, N-methylacetamide, dimethylacetamide, N-methylpropionamide, hexamethylphosphoramide, and N-methylpyrrolidone. Examples of the sulfur compound include dimethylsulfoxide, sulfolane, dimethylthioformamide, and N-methylthiopyrrolidone. Examples of the ketone include acetone, 4-methyl-2-pentanone, and acetylacetone. Examples of the ether include tetrahydrofuran and monoglyme. Examples of the nitro compound include nitromethane and nitrobenzene. The fluorous solvent is a hydrocarbon compound in which a hydrogen atom is substituted by a fluorine atom, or a derivative of the hydrocarbon compound.

Dissolution of the supporting electrolyte in a molecular solvent and reaction to release free ions more easily proceed, as the dielectric constant of the solvent increases, or solvation of ions more easily occurs. Thus, a solvent having a relatively high dielectric constant ($\varepsilon r > 20$) is preferred. Examples of the molecular solvent having a dielectric constant in excess of 20 include a cyclic ester, a nitrile, an amide, a sulfur compound, acetone, acetylacetone, and a nitro compound. Needless to say, a solvent having a dielectric constant in excess of 20 and that having a dielectric constant of 20 or lower may be mixed together for the purpose of adjusting the viscosity of the resultant solvent or for other reasons.

The ionic liquid is a compound composed of a cation and an anion and assumes liquid at ambient temperature and pressure. When the solvent of an electrolytic solution is an ionic liquid, flame resistance of the electrolytic solution can be enhanced. Suitably, the ionic liquid has a cation which is one or more species selected from the group consisting of ammonium, imidazolium, pyrrolidinium, and piperidinium.

No particular limitation is imposed on the anion component of the ionic liquid. Examples of the anion component include inorganic anions such as $BF_4^-$ and $N(SO_2F)_2^-$ and organic anions such as $B(C_6H_5)_4^-$ $CH_3SO_3^-$, $CF_3SO_3^-$, $N(SO_2CF_3)_2^-$, and $N(SO_2C_4F_9)_2^-$.

The ionic liquid may also be a solvated ionic liquid. Examples of the solvated ionic liquid include a product of a supporting electrolyte dissolved in a sulfone-based solvent such as sulfolane and a sulfolane derivative or a glyme-type solvent such as tetraglyme.

When the electric charge carrier is $Li^+$, the supporting electrolyte is a lithium salt. Examples of the anion of the supporting electrolyte include $OH^-$, a halide ion (e.g., $I^-$, $Cl^-$, or $Br^-$), $SCN^-$, $BF_4^-$, $BF_3(CF_3)^-$, $BF_3(C_2F_5)^-$, $PF_6^-$, $ClO_4^-$, $SbF_6^-$, $N(SO_2F)_2^-$, $N(SO_2CF_3)_2^-$, $N(SO_2C_2F_5)_2^-$, $B(C_6H_5)_4^-$, $B(O_2C_2H_4)_2^-$, $C(SO_2F)_3^-$, $C(SO_2CF_3)_3^-$, $CF_3COO^-$, $CF_3SO_2O^-$, $C_6F_5SO_2O^-$, $B(O_2C_2O_2)_2^-$, and $RCOO^-$ (R represents a C1 to C4 alkyl group, a phenyl group, or a naphthyl group). The supporting electrolyte may be a mixture of the lithium salts.

The supporting electrolyte concentration of the electrolytic solution is 0.2 $mol/dm^3$ or higher, preferably 0.5 $mol/dm^3$ or higher, more preferably 1.0 $mol/dm^3$ or higher. As the supporting electrolyte concentration increases, the number of the solvent molecules coordinating with the electric charge carrier increases. As a result, the amount of non-coordinating solvent decreases, and coordination with the counter anion (i.e., ion association) becomes dominant. Thus, reductive decomposition of the electrolytic solution is suppressed, and oxidation potential rises, to thereby provide a wider potential window. The supporting electrolyte concentration of the electrolytic solution is preferably 4.0 $mol/dm^3$ or lower, more preferably 2.0 $mol/dm^3$ or lower. When the supporting electrolyte concentration exceeds 4.0 $mol/dm^3$, there is considerably observed tendency of a drop in ion conductivity due to an increase in viscosity of electrolytic solution.

In electrical conduction in electrolytic solution, ion conduction is predominant. The ion conductivity of an electrolytic solution is proportional to a product of the electric charge carrier concentration of the electrolytic solution and the mobility of the electric charge carrier in the electrolytic solution. The electric charge carrier concentration is equivalent to the supporting electrolyte concentration. Since the mobility of the electric charge carrier depends on the ease of moving molecules, the mobility deeply correlates with the viscosity of the solvent. In the electrolytic solution, there is evoked solvation which involves ions bonding of ions dissociated from the supporting electrolyte in the solvent to solvent molecules, or interaction between ions forming the supporting electrolyte. Thus, the viscosity of the electrolytic solution depends on the intensity of intermolecular force between solvent molecules.

The viscosity of the electrolytic solution may be determined by means of a dynamic mechanical analyzer (rheometer) in the form of a parallel disk form. In the rheometer, shearing strain is applied in a periodic mode to an electrolytic solution placed between the two circle plates disposed in parallel via vibration of the circle plates. From the response as a wave form of the shear force and the phase difference, storage modulus and loss modulus are determined.

The electrolytic solution exhibits a difference between the loss modulus at 25°C and the storage modulus at 25°C of 2,440 Pa or more and 6,720 Pa or less. Although no precise mechanism has been elucidated, when the difference between the loss modulus at 25°C and the storage modulus at 25°C is 2,440 Pa or more and 6,720 Pa or less, conceivably, the mobility of anions decreases, to thereby relatively enhance the mobility of cations (electric charge carrier). Thus, the transport number of the electric charge carrier involved in energy conversion can be enhanced.

The loss modulus of an electrolytic solution at 25°C is preferably 5,400 Pa or higher and preferably 6,800 Pa or lower. The storage modulus of an electrolytic solution at 25°C is preferably 0.12 Pa or higher and preferably 0.34 Pa or lower. The preferred conditions are provided for the purpose of further enhancement in the transport number of an electric charge carrier.

In one exemplary manner, controlling of the viscosity of an electrolytic solution includes surface modification of particles 18 and bringing the modified particles 18 into contact with the electrolytic solution. As a result, the storage modulus of the electrolytic solution decreases, thereby leading to an increase in loss modulus. An example of the method of surface modification the particles 18 is a chemical treatment. Through the chemical treatment, the surfaces of the particle 18 can be modified to an acidic or basic state. Examples of the chemical treatment include a method in which a modifying agent is caused to be adsorbed on the particles 18 in a liquid phase, and a method in which a modifying agent is reacted with the particles 18 in a gas phase. As a preliminary treatment with respect to surface modification, the surface activity of the particles 18 is preferably enhanced through application of compressive force or shear force to the particles 18 by means of a rotary container or a rotary paddle or a combination thereof, or application of impulsive force to the particles 18 which are dispersed in high-speed gas flow.

When the particles 18 are formed of the complex oxide having a garnet-type crystal structure including Li, La, and Zr, lithium hydroxide and lithium carbonate are formed on the surfaces of the particles 18 via gas phase reaction between the particles 18 and carbon dioxide or water, whereby the surfaces of the particles 18 can be modified to a basic state. Since surface modification of the particles 18 is easy, the electrolytic solution can be easily prepared through contact with the particles 18.

After contact of the electrolytic solution with the particles 18, the particles 18 may be disposed in the active material layer 13 with the electrolytic solution. In an alternative manner, the particles 18 may be caused into contact with the electrolytic solution, and then the electrolytic solution is separated from the particles 18, whereby only the electrolytic solution is fed to the active material layer 13. Examples of the means for separating the particles 18 from the electrolytic solution include filtration, sedimentation separation, and centrifugation.

The impurity content of the electrolytic solution, the impurity including water, alcohol, epoxide, lithiumalkyl carbonate, and a reaction product thereof with the electrolytic solution, is preferably 200 ppm or lower, more preferably 100 ppm or lower, particularly preferably 10 ppm or lower. The preferred conditions are set for reducing time-over degradation of the electrolytic solution due to such an impurity.

The active material layer 13 may contain a binder that can bind the active material 19. No particular limitation is imposed on the binder, so long as the binder can bind the active material 19. Examples of the binder include fluororesin, polyolefin, polyimide, polyvinylpyrrolidone, poly(vinyl alcohol), cellulose ether, and rubber-like polymer such as styrene-butadiene rubber. Examples of the fluororesin include vinylidene fluoride-based polymer, poly(chlorotrifluoroethylene), poly(vinyl fluoride), 4-fluoroethylene-perfluoroalkyl vinyl ether copolymer, 4-fluoroethylene-6-fluoropropylene copolymer, ethylene-4-fluoroethylene copolymer, and ethylene-chlorotrifluoroethylene copolymer.

The relative amount of the electrolytic solution (vol%) with respect to the total volume of the electrolytic solution and the active material 19 contained in the active material layer 13 is preferably 10% or higher and 20% or lower, from the viewpoint of reducing the interfacial resistance of the active material 19 serving as the charge-discharge reaction site, while the equilibrium state potential of the positive electrode 11 is maintained.

When the active material layer 13 contains the particles 18, the relative volume (vol%) of the particles 18 with respect to the total volume of the particles 18 and the active material 19 is preferably 15% or more and 20% or less, from the viewpoint of securing equilibrium potential of the positive electrode 11 and the contact interface between the particles 18 and the active material 19.

Each of the particle 18 content, the active material 19 content, and the electrolytic solution content (vol%) may be determined through analysis of a vision field ($\times$5,000) selected at random from a cross-section of the active material layer 13 under a scanning electron microscope (SEM) equipped with an energy dispersive X-ray spectrometer (EDS). In the analysis, distribution of elements is characterized, or image analysis of a backscattered electron image is conducted in terms of contrast, to thereby determine the area attributed to each of the particles 18, the active material 19, and the electrolytic solution. The relative area of the particles 18 with respect to the sum of the area of the particles 18 and that of the active material 19 is considered as the corresponding volume ratio, to thereby derive the particle 18 content (vol%). Similarly, the relative area of the electrolytic solution with respect to the sum of the area of the active material 19 and that of the electrolytic solution is considered as the corresponding volume ratio, to thereby derive the electrolytic solution content (vol%).

The cross-section of the active material layer 13; i.e., a target of analysis, is a polished surface, a surface obtained through irradiation with a focused ion beam (FIB), or a surface obtained through ion milling. The polished surface is obtained by, for example, freezing the active material layer 13, or embedding the active material layer 13 in a 4-functional epoxy resin or the like to solidify, followed by polishing.

The negative electrode 15 includes the active material layer 17 and a current-collector 16 stacked thereon. The current-collector 16 is a member having an electrical conductivity. Examples of the material of the current-collector layer 16 include metals selected from among Ni, Ti, Fe, Cu, and Si; alloys each containing two or more of such metals; stainless steel; and carbon material.

The active material layer 17 contains the active material 20. In order to lower the resistance of the active material layer 17, the active material layer 17 may further contain a conducting aid. Examples of the conducting aid include carbon black, acetylene black, Ketjen black, carbon fiber, Ni, Pt, and Ag. In the present embodiment, the active material layer 17 contains the particles 18.

No particular limitation is imposed on the material of the active material 20, so long as occlusion and release of the electric charge carrier can be achieved. The material of the active material 20 is appropriately chosen in accordance with the type of the electric charge carrier. Examples of the active material 20 include carbonaceous materials (such as porous carbon, natural carbon, artificial carbon, easy-to-graphitize carbon, hard-to-graphitize carbon, and carbon fiber), $Li_4Ti_5O_{12}$, Si, Si-Li alloy, a compound containing Si and O as constituent elements (hereinafter referred to as "SiOx," wherein $0.5 \le X \le 1.5$), metallic lithium, lithium alloys (such as Li-Al alloy, Li-Sn alloy, Li-Si alloy, Li-Mg alloy, and Li-Si alloy), In-Sb alloy, and Si-Li alloy. Examples of the SiOx include Si oxide and a structure of microcrystalline or amorphous Si dispersed in amorphous $SiO_2$ matrix.

The electrochemical element 10 is fabricated through, for example, the following procedure. Specifically, the particles 18, the active material 19, and a conducting aid are mixed together, and a solution of a binder dissolved in a solvent is added to the mixture, to thereby prepare a slurry. The slurry is applied onto the current-collector 12, followed by drying, to thereby yield a positive electrode sheet.

Separately, the particles 18, the active material 20, and the conducting aid are mixed together, and a solution of a binder dissolved in a solvent is added to the mixture, to thereby prepare a slurry. The slurry is applied onto the current-collector 16, followed by drying, to thereby yield a negative electrode sheet.

While a separator 14 which separates the positive electrode sheet from the negative electrode sheet, the positive electrode sheet and the negative electrode sheet are stacked, these members are wound by means of a winding device, to thereby provide a cylindrical or square cell. A terminal (not illustrated) is connected to each of the current-collectors 12, 16, and an electrolytic solution exhibiting a difference between the loss modulus at 25°C and the storage modulus at 25°C of 2,440 Pa or more and 6,720 Pa or less is charged into a container (not illustrated) accommodating the cell. The container is closely sealed, to thereby yield the electrochemical element 10 including the positive electrode 11, the separator 14, and the negative electrode 15.

In the electrochemical element 10, the electrolytic solution exhibiting a difference between the loss modulus at 25°C and the storage modulus at 25°C of 2,440 Pa or more and 6,720 Pa or less, which solution achieves high mobility of electric charge carriers, is charged into the active material layer 13 of the positive electrode 11. Thus, even when the thickness of the active material layer 13 increases to provide a longer moving path of the electric charge carrier during charging and discharging in the active material layer 13, an increase in moving resistance of the electric charge carriers can be prevented. Since the active material layer 13 can have a greater thickness, the yielded electrochemical element 10 successfully exhibits a large capacity and achieves quick charging.

The electrolytic solution exhibiting a difference between the loss modulus at 25°C and the storage modulus at 25°C of 2,440 Pa or more and 6,720 Pa or less can enhance the transport number of the electric charge carriers, as compared with a conventional electrolytic solution. Thus, concentration polarization, which would otherwise easily occur during quick charging and discharging, can be suppressed. Since there can be prevented a drop in operation voltage (terminal voltage) of the electrochemical element 10 in a short period of time, the electrolytic solution is advantageous for a long service-life of the electrochemical element 10.

The electrolytic solution that can provide high electric charge carrier mobility has been charged into the active material layer 13 of the positive electrode 11. As a result, there can be secured both the mobility of the electric charge carriers in a site which is in contact with the particles 18 in the active material layer 13 and that in another site apart from the particles 18. Since the electric charge carrier moving speed (dispersion speed) is highly temperature-dependent, the speed decreases as the temperature lowers. However, since the electric charge carrier mobility can be secured, operation of the electrochemical element 10 can be secured, even when the temperature around the electrochemical element 10 is low.

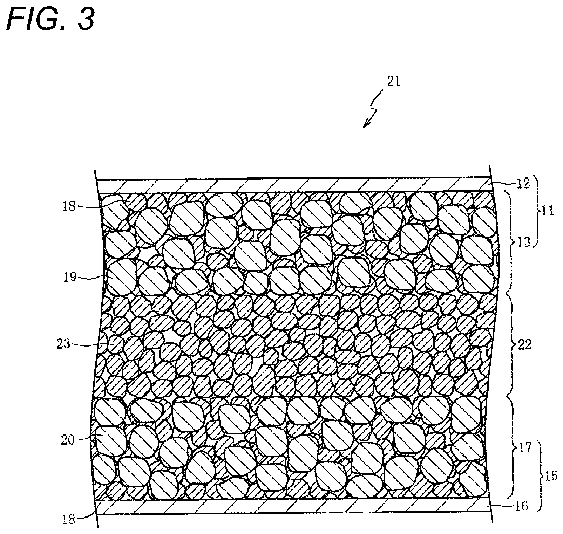

With reference to FIG. 3, a second embodiment will next be described. The above-described first embodiment corresponds to the case in which the separator 14 separating the positive electrode 11 from the negative electrode 15 is made of nonwoven fabric or porous membrane which is formed of cellulose, polypropylene, or the like. In the second embodiment, there is described an electrochemical element 21 in which a separator 22 separating the positive electrode 11 from the negative electrode 15 contains an electrolyte 23. Notably, in the second embodiment, the same members as employed in the first embodiment are denoted by the same reference numbers, and overlapping descriptions will be omitted.

FIG. 3 is a cross-sectional view of the electrochemical element 21 in the second embodiment. The electrochemical element 21 (power storage device) includes, from top to bottom, a positive electrode layer 11, a separator 22, and a negative electrode layer 15. The separator 22 contains an electrolyte 23. Examples of the electrolyte 23 include an electrolyte in the form of ion-conductive solid or gel. Alternatively, a mixture of the electrolyte 23 and an electrolytic solution may be placed in the separator 22.

The electrolyte 23 includes one or more species selected from the group consisting of a sulfide-type electrolyte, an oxide-type electrolyte, a hydride-type electrolyte, a halide-type electrolyte, and an organic electrolyte. Examples of the sulfide-type electrolyte include a crystalline thio-LISICON type, an $Li_{10}GeP_2S_{12}$ type, an argyrodite type, an $Li_7P_3S_{11}$ type, and a glass- or glass ceramic-type typically $Li_2S$-$P_2S_5$. Examples of the oxide-type electrolyte include an oxide having a NASICON-type structure, an oxide having a perovskite-type structure, and an oxide having a garnet-type structure.

Examples of the hydride-type electrolyte include a solid solution of $LiBH_4$ with a lithium halide compound (LiI, LiBr, or LiCl) or lithium amide ($LiNH_2$). Examples of the halide-type solid electrolyte include $Li_3YCl_6$. Examples of the organic solid electrolyte include polyethylene oxide, polypropylene oxide, and polyacrylonitrile.

The electrochemical element 21 is fabricated through, for example, the following procedure. Firstly, a solution formed by dissolving a lithium salt in a non-aqueous solvent is mixed with the particles 18, and the mixture is further mixed with the active material 19. Then, the resultant mixture is further mixed with a solution formed by dissolving a binder in a solvent, to thereby prepare a slurry. The slurry is applied onto the current-collector 12, followed by drying, to thereby yield the active material layer 13.

Separately, a solution formed by dissolving a lithium salt in a non-aqueous solvent is mixed with the particles 18, and the resultant mixture is further mixed with a solution formed by dissolving a binder in a solvent, to thereby prepare a slurry for providing a separator. The slurry for providing a separator is applied onto the active material layer 13, followed by drying, to thereby yield a positive electrode sheet.

Yet separately, a solution formed by dissolving a lithium salt in a non-aqueous solvent is mixed with the particles 18, and the mixture is further mixed with an active material 20. Then, the resultant mixture is further mixed with a solution formed by dissolving a binder in a solvent, to thereby prepare a slurry. The slurry is applied onto the current-collector 16, followed by drying, to thereby yield an active material layer 17. Then, the slurry for providing a separator is applied onto the active material layer 17, followed by drying, to thereby yield a negative electrode sheet.

The positive electrode sheet and the negative electrode sheet are cut into shapes of interest, respectively. The positive electrode sheet and the negative electrode sheet are stacked so that the separator 22 intervenes between the positive electrode 11 and the negative electrode 15. The stacked product is pressed, to thereby fabricate a cell. A terminal (not illustrated) is connected to each of the current-collectors 12 and 16, and the product is placed in a container (not illustrated), then closing the container, whereby the electrochemical element 21 including the positive electrode 11, the separator 22, and the negative electrode 15 is fabricated.

The electrochemical element 21 of the second embodiment contains an electrolytic solution in the positive electrode 11, negative electrode 15, and separator 22. Thus, similar to the electrochemical element 10 of the first embodiment, the electrochemical element 21 of the second embodiment is advantageous for enhancing capacity and quick charging.

EXAMPLES

The present invention will next be described in more detail by way of Examples, which should not be construed as limiting the invention thereto.

(Example 1)

$Li_2CO_3$, MgO, $La(OH)_3$, $SrCO_3$, and $ZrO_2$ were weighed in specific amounts so as to form $Li_{6.95}Mg_{0.15}La_{2.75}Sr_{0.25}Zr_{2.0}O_{12}$. In consideration of volatilization of Li during firing, the amount of $Li_2CO_3$ was adjusted in about 15 mol% excess (as reduced to Li). The thus-weighed raw materials and ethanol were put into a nylon-made pot with zirconia balls, and the mixture was subjected to pulverization with the ball mill for 15 hours. The resultant slurry was removed from the pot and dried, and then fired on an MgO plate at 1,100°C for 15 hours. After firing, the powder was further pulverized and put into a sheath made of MgO. Further firing was conducted at 1,100°C for 4 hours. After the additional firing operation, the powder was further pulverized in a glove box under argon, to thereby yield an oxide solid electrolyte (hereinafter referred to as "LLZ").

Through a powder X-ray diffraction method, the crystal structure of the LLZ was determined to be a garnet type. The median diameter (D50) on particle size distribution of the LLZ, as determined through a laser diffraction/scattering method, was 74 μm.

The LLZ was further pulverized by means of a dry jet mill (Nano Jetmizer (registered trademark) NJ-50, product of Aishin Nano Technologies, Co., Ltd.). In pulverization, LLZ was caused to pass thrice through the jet mill once at a jet nozzle pressure of 2.0 MPa and a milling rate of 480 g/hr in a nitrogen atmosphere. The thus-pulverized LLZ was stored in an argon atmosphere (dew point: -70°C) for 24 hours, to thereby yield particles of Example 1.

(Example 2)

The procedure of Example 1 was repeated, except that LLZ was pulverized through causing to pass the jet mill twice, to thereby yield particles of Example 2.

(Example 3)

The procedure of Example 1 was repeated, except that LLZ was pulverized through causing to pass the jet mill once, and the unit pulverization amount was changed to 960 g/hr, to thereby yield particles of Example 3.

(Example 4)

The procedure of Example 1 was repeated, except that LLZ was pulverized through causing to pass the jet mill 10 times, to thereby yield particles of Example 4.

(Measurement of particle size distribution and specific surface area)

The median diameter (D50) on particle size distribution of each of the particles of Examples 1 to 4 was determined through a laser diffraction/scattering method. Also, the specific surface area of each of the particles of Examples 1 to 4 was determined in accordance with JIS R1626:1996.

(Preparation and measurement of electrolytic solution)

Ethylene carbonate, dimethyl carbonate, and ethyl methyl carbonate were mixed at proportions of 1:1:1 (by volume), to thereby provide a non-aqueous solvent. To the solvent, $LiPF_6$ was added so that the content thereof was adjusted to 1 mol/dm$^3$, to thereby prepare an electrolytic solution. Each of the particles of Examples 1 to 4 and the electrolytic solution were mixed at a ratio of 16.5:83.5 (by mass), and the mixture was placed into a test tube, followed by mixing for 30 minutes. Subsequently, the test tube was capped and allowed to stand for 24 hours, to thereby separate the formed particles through sedimentation. The supernatant was recovered, to thereby obtain electrolytic solutions of Examples 1 to 4. The electrolytic solution before mixing with the particles was employed as an electrolytic solution of Comparative Example.

Storage modulus and loss modulus of an electrolytic solution of each of Examples 1 to 4 and Comparative Example were measured by means of a dynamic mechanical analyzer (rheometer) of a parallel disk type. The distance between the two disk disposed in parallel was 0.3 mm; the diameter of each disk was 25 mm; the temperature of the electrolytic solution and that around each disk were 25°C; the frequency of vibration of each disk was 100 Hz; and the strain applied to the electrolytic solution was 1%.

(Measurement of transport number)

Metallic lithium foil was attached to a stainless steel plate (diameter: 20 mm), and two such lithium-on-stainless steel plates were provided. Between the metallic lithium foil layers, 38 sheets of a separator (thickness: 15 μm) made of polypropylene was inserted. Each of the electrolytic solutions of Examples 1 to 4 and Comparative Example was injected to the stacked separators, and the product was fixed with a polyimide adhesive tape, to thereby provide symmetric cells of Examples 1 to 4 and Comparative Example. Fabrication of symmetric cells and the following measurement were conducted in a glove box filled with argon gas (dew point: -60°C).

The transport number of lithium ions was determined through AC impedance measurement and chronoamperometry. In a specific procedure, the AC impedance of each symmetric cell was measured, and a DC polarization voltage ΔV was applied to the cell. A change over time of the current flowing in the cell was monitored. After reaching a steady state, AC impedance was measured again. The transport number t of lithium ions was calculated by the following numerical expression.

$$t=\{I_S(\Delta V-I_0 R_0)\}/\{I_0(\Delta V-I_S R_S)\}$$

In the above equation, $I_S$ represents a current in the steady state; $I_0$ represents an initial current on voltage application; $R_0$ and $R_S$ represent interfacial resistances between the separator and electrodes before and after chronoamperometry, respectively. The application voltage in chronoamperometry ΔV was adjusted to 3 mV.

Table 1 shows the median diameter and specific surface area of the particle samples of Examples 1 to 4, and loss modulus, storage modulus, the difference between loss modulus and storage modulus, and lithium ion transport number of each electrolytic solution of Examples 1 to 4 and Comparative Example.

[Table 1]

| | Particles | | Electrolytic solution | | | Transport number |
|---|---|---|---|---|---|---|
| | D50 ($\mu$m) | Sp. surface area ($m^2$/g) | Loss modulus (Pa) | Storage modulus (Pa) | Difference (Pa) | |
| Ex. 1 | 0.8 | 2.66 | 5,460 | 0.272 | 5,460 | 0.342 |
| Ex. 2 | 1.1 | 2.25 | 2,841 | 0.142 | 2,841 | 0.255 |
| Ex. 3 | 2.1 | 1.75 | 2,442 | 0.122 | 2,442 | 0.171 |
| Ex. 4 | 0.4 | 15.5 | 6,717 | 0.336 | 6,717 | 0.303 |
| Comp. Ex. | - | - | 2,980 | 1,220 | 1,760 | 0.125 |

As shown in Table 1, the transport number of each of the electrolytic solutions of Examples 1 to 4 was greater than that of the electrolytic solution of Comparative Example; i.e., 0.125. In Examples 1 to 4, the difference between the loss modulus of the electrolytic solution and the storage modulus of the same solution was 2,440 Pa or more and 6,720 Pa or less, and the difference was 1,760 Pa in Comparative Example. Thus, the electrolytic solution having contact with particles which had been received a specific treatment was found to exhibit an increased difference between the loss modulus and the storage modulus. When the difference between the loss modulus of the electrolytic solution and the storage modulus of the same solution was 2,440 Pa or more and 6,720 Pa or less, a greater transportation number of lithium ions was found to be achieved, as compared with the electrolytic solution before contact with the particles (i.e., Comparative Example).

The loss modulus of each of the electrolytic solutions of Examples 1 to 4 was 5,400 Pa or higher, and that in Comparative Example was 2,980 Pa. Thus, the electrolytic solution having contact with particles which had been received a specific treatment was found to exhibit an increased loss modulus. When the loss modulus of the electrolytic solution was 5,400 Pa or higher, a greater transportation number of lithium ions was found to be achieved.

The storage modulus of each of the electrolytic solutions of Examples 1 to 4 was 0.34 Pa or lower, and that in Comparative Example was 1,220 Pa. Thus, when the storage modulus of the electrolytic solution was 0.34 Pa or lower, a greater transportation number of lithium ions was found to be achieved.

The present invention has been described in detail by way of the embodiments. However, the present invention is not limited to the above embodiments. It can be easily inferred that those skilled in the art can easily conceive various improvements and modifications, so long as they fall within the scope of the present invention.

In the above-described embodiments, the electrochemical element 10 has the positive electrode 11 in which the active material layer 13 is provided on one surface of the current-collector 12, and the negative electrode 15 in which the active material layer 17 is provided on one surface of the current-collector 16. However, the present invention is not necessarily limited thereto. It should be apparent for those skilled in the art that the elements of the above embodiments can be applied to, for example, an electrochemical element in which an electrode layer having the current-collector 12 provided with the active material layer 13 and the active material layer 17 on each surface (i.e., a so-called bipolar electrode). By alternatingly stacking the bipolar electrode and the separator 14, and inserting the stacked product into a case (not illustrated), a so-called bipolar structure electrochemical element can be obtained.

One of the above-described embodiments corresponds the case in which the active material layers 13, 17 contain the particles 18. However, the present invention is not necessarily limited thereto. Needless to say, the particles 18 of at least one of the active material layers 13, 17 may be omitted.

Although no description has been made on the above embodiments, needless to say, a protective layer may be disposed between the active material layer 17 and the separators 14, 22, or a protective layer may be disposed between the current-collector 16 and the active material layer 17. The protective layer contains a complex oxide having a garnet-type crystal structure including Li, La, and Zr. By disposing a protective layer between the active material layer 17 and the separators 14, 22, short circuit possibly caused by dendrite can be suppressed. By disposing a protective layer between the current-collector 16 and the active material layer 17, degradation of the current-collector 16 can be suppressed.

In the above-described embodiments, the electrochemical elements 10, 21 have been described, taking an ion battery such as a lithium ion battery, or an electrochemical capacitor as an example. However, the present invention is not necessarily limited thereto. Examples of other electrochemical elements include a metal-air battery in which oxygen in air is employed as a positive electrode active material, and a metal such as Li, Zn, Al, Mg, or Fe is employed as a negative electrode active material, and an electrolytic capacitor.

REFERENCE SIGNS LIST

10, 21 electrochemical element
11 positive electrode (electrode)
15 negative electrode (electrode)
18 particle

**Claims**

1. An electrolytic solution comprising a non-aqueous solvent
   which solution exhibits a difference between a loss modulus at 25°C and a storage modulus at 25°C of 2,440 Pa or more and 6,720 Pa or less.

2. The electrolytic solution according to claim 1, wherein
   the loss modulus is 5,400 Pa or higher.

3. The electrolytic solution according to claim 1 or 2, wherein the storage modulus is 0.34 Pa or lower.

4. The electrolytic solution according to claim 1 or 2, wherein
   a supporting electrolyte is added to the non-aqueous solvent, and a supporting electrolyte concentration is 1 mol/dm$^3$ or higher and 2 mol/dm$^3$ or lower.

5. The electrolytic solution according to claim 1 or 2, wherein
   the supporting electrolyte added to the non-aqueous solvent is a lithium salt.

6. An electrolyte composition comprising an electrolytic solution as recited in claim 1 or 2, and particles of an oxide solid electrolyte.

7. The electrolyte composition according to claim 6, wherein
   the oxide solid electrolyte has a garnet-type crystal structure including Li, La, and Zr.

8. An electrochemical element having an electrode, wherein
   the electrode contains an electrolytic solution as recited in claim 1 or 2.

9. The electrochemical element according to claim 8, wherein
   the electrode is a positive electrode.

FIG. 1

FIG. 2

FIG. 3

## INTERNATIONAL SEARCH REPORT

| International application No. |
| --- |
| **PCT/JP2024/030497** |

### A. CLASSIFICATION OF SUBJECT MATTER

*H01M 10/0566*(2010.01)i; *H01G 11/56*(2013.01)i; *H01G 11/58*(2013.01)i; *H01G 11/62*(2013.01)i; *H01M 4/13*(2010.01)i; *H01M 4/62*(2006.01)i; *H01M 10/052*(2010.01)i; *H01M 10/0562*(2010.01)i; *H01M 10/0568*(2010.01)i; *H01M 12/08*(2006.01)i

FI: H01M10/0566; H01G11/56; H01G11/58; H01G11/62; H01M4/13; H01M4/62 Z; H01M10/052; H01M10/0562; H01M10/0568; H01M12/08 K

According to International Patent Classification (IPC) or to both national classification and IPC

### B. FIELDS SEARCHED

Minimum documentation searched (classification system followed by classification symbols)

H01M10/0566; H01G11/56; H01G11/58; H01G11/62; H01M4/13; H01M4/62; H01M10/052; H01M10/0562; H01M10/0568; H01M12/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | JP 2020-198270 A (NISSAN MOTOR CO., LTD.) 10 December 2020 (2020-12-10) | 1-9 |
| A | JP 2-291603 A (HITACHI MAXELL LTD.) 03 December 1990 (1990-12-03) | 1-9 |
| A | WO 2006/061993 A1 (TORAY INDUSTRIES, INC.) 15 June 2006 (2006-06-15) | 1-9 |
| A | US 2021/0376378 A1 (SAMSUNG ELECTRONICS CO., LTD.) 02 December 2021 (2021-12-02) | 1-9 |

☐ Further documents are listed in the continuation of Box C.  ☑ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **05 November 2024** | **19 November 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

### INTERNATIONAL SEARCH REPORT
**Information on patent family members**

International application No.

**PCT/JP2024/030497**

| Patent document cited in search report | | | Publication date (day/month/year) | Patent family member(s) | | | Publication date (day/month/year) |
|---|---|---|---|---|---|---|---|
| JP | 2020-198270 | A | 10 December 2020 | (Family: none) | | | |
| JP | 2-291603 | A | 03 December 1990 | US | 5227043 | A | |
| | | | | EP | 378123 | A1 | |
| WO | 2006/061993 | A1 | 15 June 2006 | US | 2010/0015493 | A1 | |
| | | | | EP | 1858096 | A1 | |
| | | | | KR | 10-2007-0085786 | A | |
| | | | | CN | 101073174 | A | |
| US | 2021/0376378 | A1 | 02 December 2021 | EP | 3920280 | A1 | |
| | | | | KR | 10-2021-0149619 | A | |
| | | | | CN | 113764724 | A | |

Form PCT/ISA/210 (patent family annex) (July 2022)

**EP 4 773 293 A1**

**Patent documents cited in the description**

- JP 2011044252 A